# EUROPÄISCHE PATENTSCHRIFT

(11) **EP 2 460 260 B1**
(45) Veröffentlichungstag und Bekanntmachung des Hinweises auf die Patenterteilung: **04.09.2019**
(21) Anmeldenummer: 10737738.4
(22) Anmeldetag: 25.06.2010
(51) Int. Cl.: H02K 3/51, H02K 3/24, H02K 3/12, H02K 3/52

(54) **WICKELKOPFABSTÜTZUNG EINER ELEKTRISCHEN MASCHINE**
WINDING OVERHANG SUPPORT OF AN ELECTRICAL MACHINE
SUPPORT DE TÊTE DE BOBINE D'UNE MACHINE ÉLECTRIQUE

(30) Priorität: 29.07.2009 AT 11892009
(43) Veröffentlichungstag der Anmeldung: 06.06.2012
(73) Patentinhaber: Andritz Hydro GmbH, 1141 Wien (AT)
(72) Erfinder: LEXER, Alfred, A-8160 Mordantsch (AT); HELMLINGER, Stefan, A-8160 Weiz (AT)
(74) Vertreter: Tschinder, Thomas
(86) Internationale Anmeldenummer: PCT/AT2010/000231
(87) Internationale Veröffentlichungsnummer: WO 2011/011801

(56) Entgegenhaltungen:
- EP-A2- 1 598 921
- JP-A- 53 146 101
- US-A- 4 387 317
- US-A- 5 666 016

## Beschreibung

Die gegenständliche Erfindung betrifft eine Abstützung für einen Wickelkopf eines Rotors einer elektrischen Maschine, wobei der Rotor ein Blechpaket umfasst, in dem über dessen Umfang verteilt Wicklungsstäbe eingelegt sind, wobei sich die Wicklungsstäbe über ein axiales Ende des Blechpakets zur Ausbildung des Wickelkopfes hinaus erstrecken und ein Verfahren zur Montage einer Rotorwicklung mit einer solchen Wickelkopfabstützung.

Werden die Rotoren elektrischer Maschinen mit Stabwicklungen ausgeführt, so unterliegen diese mitunter hohen Fliehkräften, insbesondere bei hohen Drehzahlen. Z.B. sind die Rotorwicklungen von drehzahlvariablen Maschinen häufig als Stabwicklung ausgeführt. Insbesondere die Maschinen von drehzahlvariablen Pumpspeicherkraftwerken werden bei hohen Drehzahlen betrieben und deren Stabwicklungen daher hohen Zentripetalbeschleunigungen ausgesetzt. Im Bereich des Rotorkörpers liegen üblicherweise, wie hinlänglich bekannt, jeweils zwei Wicklungsstäbe übereinander angeordnet in axialen Nuten und werden radial gegen die Fliehkraft durch Nutkeile gehalten. Um das notwendige Verschaltungsschema und die erforderlichen Abstände der Wicklungsstäbe zueinander zu erreichen, müssen die Wicklungsstäbe im Bereich des Wickelkopfes gegen die axiale Richtung schräg geführt werden, wobei die Wicklungsstäbe von Oberlage und Unterlage in entgegen gesetzte Richtungen schräg laufen, sodass sich diese überkreuzen. Aufgrund der komplizierten Anordnung und Geometrie der Wicklungsstäbe im Wickelkopfbereich ist eine Führung in Nuten und Verkeilung wie im Bereich des Rotorkörpers nicht möglich. Die Wickelköpfe werden folglich durch die herrschenden Fliehkräfte belastet, was eine radiale Abstützung der Wickelköpfe notwendig macht.

Darüber hinaus müssen die Wickelköpfe, bzw. die Wicklungsstäbe im Bereich der Wickelköpfe, wie ebenfalls hinlänglich bekannt, gekühlt werden. In der Regel erfolgt die Kühlung über ein gasförmiges Kühlmedium, das über die Wickelköpfe geleitet wird.

Aus dem Stand der Technik sind verschiedene Möglichkeiten für eine Wickelkopfabstützung bekannt. Gängig sind so genannte Rotorkappen, die meistens auf den Rotorkörper aufgeschrumpft werden und sich folglich auf dem Rotorkörper abstützen. Ein Beispiel dafür ist die GB 378 920 A bei der ein Außenring mit Zähnen durch die Rotornuten auf den Rotorkörper aufgeschoben wird und anschließend verdreht wird, sodass die Zähne zwischen zwei Nuten zu liegen kommen, womit die axiale Beweglichkeit des Außenringes blockiert ist. Dieser Außenring stützt den Wickelkopf in radialer Richtung gegen die Fliehkräfte. Eine ähnliche Anordnung zeigt die GB 1 474 439 A, bei der außen um den Wickelkopf zwei Ringe aufgeschrumpft werden, die sich aber wieder radial am Rotorkörper abstützen. Problematisch ist bei solchen Anordnungen, insbesondere bei elektrischen Maschinen im hohen Leistungsbereich, dass durch die auf den Rotorkörper aufgeschrumpfte Rotorkappe die zwischen den Teilblechpaketen für die Kühlung des Rotors angeordneten Lüftungsschlitze verschlossen werden, wodurch die Kühlung des Rotorkörpers in diesem Bereich gestört wird.

Die US 5,666,016 A offenbart eine Wickelkopfabstützung für einen elektrischen Generator, bei dem die Wicklungen des Wickelkopfes über kammartige Elemente beanstandet und über einzelne innenliegende Halteelemente und ein außenliegendes Metallband gestützt werden. Die EP 1 598 921 A2 offenbart ebenfalls kammartige Elemente, die in die Wicklungszwischenräume des Wickelkopfes gesteckt werden und die fest mit dem Rotorkörper verbunden sind.
Die JP 53 146101 A offenbart Kappen, die auf den Wickelkopf gesteckt werden.
In der US 4 387 317 A wird der Wickelkopf über harzgefüllte Schläuche stabilisiert.

Aufgabe der gegenständlichen Erfindung ist es daher eine Wickelkopfabstützung anzugeben, mit der die obigen Nachteile vermieden werden und trotzdem eine ausreichende radiale Abstützung des Wickelkopfes und eine ausreichende Kühlung des Wickelkopfes gewährleistet werden kann.

Diese Aufgabe wird erfindungsgemäß dadurch gelöst, dass die Wickelkopfabstützung im Bereich des Wickelkopfes einen Außenring und einen Innenring umfasst, zwischen denen die Wicklungsstäbe im Bereich des Wickelkopfes anordenbar sind, wobei der Außenring auf die Wicklungsstäbe und den Innenring aufgeschrumpft ist und mit dem Innenring und den Wicklungsstäben im Bereich des Wickelkopfes einen Verbund bildet und sowohl der Außenring, als auch der Innenring vom Blechpaket axial beabstandet angeordnet ist, wobei sich beide Ringe radial ungehindert aufweiten können, sodass sich der Verbund in radialer Richtung im Wesentlichen frei bewegen (dehnen) kann.

Durch diese Anordnung zweier Ringe, die beide vom Blechpaket axial beabstandet sind, wird die Kühlung des Blechpaketes bzw. der Wicklungsstäbe im Blechpaket nicht beeinflusst.

Durch eine geeignete Wahl der Dimensionen und der Werkstoffe des Verbundes aus Außenring, Wicklungsstäben und Innenring kann erreicht werden, dass die radialen Relativbewegungen zwischen Rotorkörper und Wickelkopf im Stillstand und in allen Betriebszuständen gering bleiben und sehr geringe Biege- bzw. Scherbeanspruchungen der Wicklungsstäbe hervorgerufen werden.

Wenn im Bereich des Wickelkopfes in Umfangsrichtung zwischen zwei benachbarten Wicklungsstäben ein Distanzstück angeordnet ist, das zumindest gleich hoch, bevorzugt geringfügig höher, ist, als die Wicklungsstäbe, kann erreicht werden, dass keine radialen Schrumpfkräfte auf die Wicklungsstäbe übertragen werden.

Die Kühlung des Wickelkopfes lässt sich sehr einfach und wirkungsvoll umsetzen, wenn das Distanzstück als Hohlprofil ausgeführt ist. Durch die Hohlprofile kann in axialer Richtung Kühlluft durchgeführt werden, womit eine Kühlung des Wickelkopfes erzielt wird.

Vorzugsweise ist in radialer Richtung zwischen Innenring und Wicklungsstäben und/oder zwischen Außenring und Wicklungsstäben eine Isolationsbeilage angeordnet. Es ist auch denkbar, dass die Isolationsbeilage zwischen Unterstab und Oberstab angeordnet ist. Dadurch kann eine bessere elektrische Isolation zwischen Ober- und Unterstäben erreicht werden.

Die erfindungsgemäße Wickelkopfabstützung kann auch eingesetzt werden, wenn in radialer Richtung ein Unterstab und ein Oberstab übereinander angeordnet sind, wobei in Umfangsrichtung zwischen zwei benachbarten Unterstäben und/oder Oberstäben ein Distanzstück, das zumindest gleich hoch, bevorzugt geringfügig höher, ist, wie der Unterstab bzw. der Oberstab, angeordnet sein kann.

Eine axiale Bewegung des Innenringes kann sehr einfach unterbunden werden, indem im Bereich des Innenringes eine Halteeinrichtung, beispielsweise Haltebleche, vorgesehen wird, die mit dem Innenring zusammenwirkt und eine axiale Bewegung des Innenrings bzw. Wickelkopfes verhindert, ohne jedoch die radiale Bewegung des Wickelkopfes zu stören.

Ebenso ermöglichen die Haltebleche durch das Eingreifen in mehrere an der Innenfläche des Innenringes befindliche radiale Nuten die Zentrierung des Wickelkopfes.

Es ist sinnvoll, wenn im Bereich des Wickelkopfes Kühlluft zwischen den Wicklungsstäben und/oder durch die Distanzstücke axial nach außen führbar ist, dadurch wird eine verbesserte Kühlung des Wickelkopfes gewährleistet.

Die Erfindung betrifft auch ein Verfahren zur Montage einer Wickelkopfabstützung einer Rotorwicklung, wobei das Verfahren folgende Verfahrensschritte umfasst:
a) ein Innenring wird axial beabstandet vom Blechpaket des Rotorkörpers angeordnet,
b) über den Umfang verteilt werden in das Blechpaket Wicklungsstäbe eingelegt, die sich zur Ausbildung eines Wickelkopfes über ein axiales Ende des Blechpaketes erstrecken, und
c) ein Außenring wird im Bereich des Wickelkopfes axial beabstandet vom Blechpakete auf die Wicklungsstäbe und den Innenring aufgeschrumpft, wobei ein Verbund aus Außenring und den Wicklungsstäben im Bereich des Wickelkopfes und dem Innenring entsteht, wobei sich beide Ringe radial ungehindert aufweiten können und wobei der Verbund in radialer Richtung im Wesentlichen frei beweglich bleibt.

Dadurch wird der Wickelkopf durch die gegenseitige Verspannung in radialer Richtung abgestützt und im Betrieb gegen die mechanischen Belastungen, welche durch die entstehenden Fliehkräfte hervorgerufen werden, geschützt.

Vorteilhafterweise wird vor dem Aufschrumpfen des Außenringes im Bereich des Wickelkopfes zwischen zwei in Umfangsrichtung benachbarten Wicklungsstäben ein Distanzstück, das bevorzugt höher als die Wicklungsstäbe ist, angeordnet.

Dadurch werden keine radialen Schrumpfkräfte auf die Wicklungsstäbe übertragen.

Die Wicklungsstäbe und die Distanzstücke können bei dem erfindungsgemäßen Verfahren auch in zwei Lagen angeordnet werden.

Die gegenständliche Erfindung wird anhand der beispielhaften schematischen und nicht einschränkenden Figuren 1 bis 3 beschrieben. Dabei zeigt
Fig. 1 einen Längsschnitt durch einen Rotor einer elektrischen Maschine,
Fig. 2 einen Querschnitt durch den Wickelkopf eines Rotors und
Fig. 3 eine Ansicht in radialer Richtung des Wickelkopfes eines Rotors.

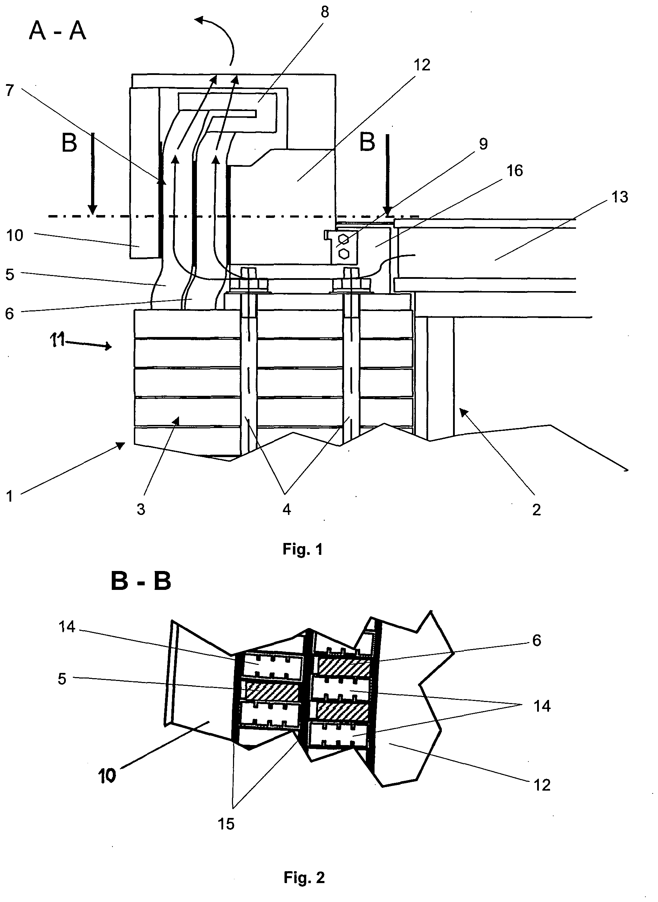

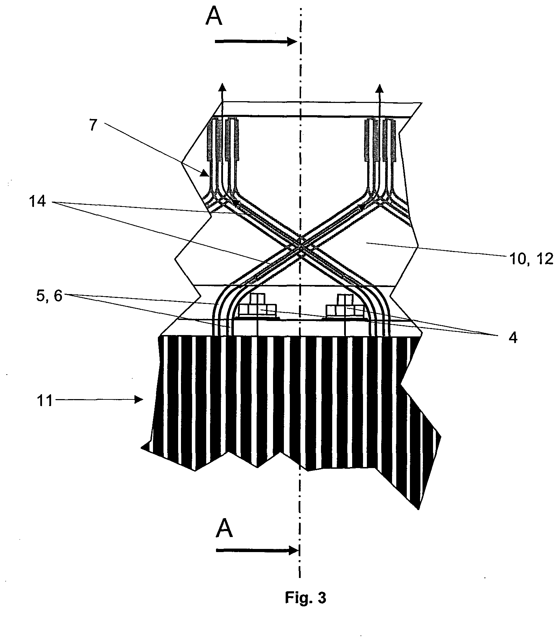

Der in Fig. 1 dargestellte Rotor 1 einer elektrischen Maschine, wie z.B. eines Hydrogenerators, umfasst einen Nabenstern 2, auf dem in bekannter Weise das Blechpaket 3 des Rotors 1 angeordnet ist. Das Blechpaket 3 wird dabei durch hinlänglich bekannte Pressbolzen 4 zusammengehalten. Nabenstern 2 und Blechpaket 3 bilden dabei den Rotorkörper 11 des Rotors 1. Im radialen äußeren Bereich des Blechpaketes 3 sind, hier nicht dargestellte, Nuten angeordnet, in denen die isolierten Wicklungsstäbe, hier ein Oberstab 5 und ein Unterstab 6, eingelegt und durch Nutkeile in radialer Richtung gehalten werden. Eine solche Anordnung ist hinlänglich bekannt, weshalb hier nicht näher darauf eingegangen wird. Die Wicklungsstäbe 5, 6 ragen in axialer Richtung auf beiden Seiten aus dem Blechpaket 3 heraus und bilden außerhalb des Blechpaketes 3 den so genannten Wickelkopf 7. Die Wicklungsstäbe 5, 6 sind, wie hinlänglich bekannt, im Bereich des Wickelkopfes 7 gegenüber der axialen Richtung schräg angeordnet, wobei der Oberstab 5 und der Unterstab 6 gegenläufig schräg angeordnet sind, sodass sich diese kreuzen, wie in Fig. 3 schematisch dargestellt. Zur Ausbildung von Wicklungen sind die Oberstäbe 5 und Unterstäbe 6, bevorzugt an ihren axialen Enden, durch Stabverbinder 8 miteinander verbunden.

Die Wicklungsstäbe 5, 6 sind erfindungsgemäß im Bereich des Wickelkopfes 7 zwischen einem Innenring 12 und einem Außenring 10 angeordnet und bilden gemeinsam mit diesen einen Verbund. Beide Ringe 10, 12 sind axial beabstandet vom Rotorkörper 11 bzw. vom Blechpaket 3 angeordnet, und berühren diesen nicht bzw. sind nicht mit diesem verbunden. Beide Ringe 10, 12 stützen sich somit, zumindest in radialer Richtung, nicht auf dem Rotorkörper 11 bzw. dem Blechpaket 3 oder anderswo ab, sondern können sich radial ungehindert aufweiten. Die Halteeinrichtung 9, z.B. ein Halteblech, das an einer Haltekonsole 16 befestigt wird, dient im Wesentlichen dazu, eine axiale Verschiebung des Wickelkopfes 7 mit den Ringen 10, 12 zu verhindern und den Innenring 12 zu zentrieren. Diese Halteeinrichtung 9 behindert aber nicht das die im Wesentlichen freie radiale Aufweiten des Verbundes. Die Halteeinrichtung 9 könnte z.B. als Blech mit einer Nase ausgeführt sein (wie in Fig. 1 angedeutet), wobei die Nase in eine Nut am Innenring 12 axial schlüssig eingreift, das Blech aber radial beabstandet vom Innenring 12 angeordnet ist und somit die radiale Beweglichkeit nicht beschränkt wird.

Der Außenring 10 wird auf den Wickelkopf 7 aufgeschrumpft und bildet durch gegenseitige Verspannung mit dem Innenring 12 einen Verbund. Um zu verhindern, dass dabei Kräfte auf die Wicklungsstäbe 5, 6 wirken, die z.B. die Isolation der Wicklungsstäbe 5, 6 verletzen könnten, kann vorgesehen sein, zwischen den Wicklungsstäben 5, 6 (in Umfangsrichtung gesehen) Distanzstücke 14 anzuordnen, die zumindest gleich hoch wie die Wicklungsstäbe 5, 6, bevorzugt aber etwas höher sind - zumindest so viel höher, dass keine Schrumpfkräfte auf die Wicklungsstäbe 5, 6 übertragen werden (z.B. zwischen 0.5 und 1mm höher als die Wicklungsstäbe 5, 6). Dies ist in Fig. 2 stark schematisch und übertrieben gezeigt. Ebenso wie die Wicklungsstäbe 5, 6 sind die Distanzstücke 14 gegenläufig schräg angeordnet und überkreuzen sich (siehe oben). Damit werden die Schrumpfkräfte vom Außenring 10 über die Distanzstücke 14 zum Innenring geleitet (im Wesentlichen über die Kreuzungspunkte der Distanzstücke 14) und die Wicklungsstäbe 5, 6 bleiben in radialer Richtung im Wesentlichen frei von Schrumpfkräften und können sich sogar in gewissen Grenzen radial bewegen. Dadurch entsteht ein Verbund aus Außenring 10, den Distanzstücken 14 und dem Innenring 12, wobei die Wicklungsstäbe 5, 6 in diesem Verbund eingebettet sind und im Wesentlichen kräftefrei bleiben. Werden die Werkstoffe dieser Teile gemäß ihrem E-Modul, die Geometrien und/oder die Schrumpftemperaturen nun geeignet gewählt, so erfahren die Wicklungsstäbe 5, 6 durch die Fliehkräfte auf den Wickelkopf 7 im Wickelkopfbereich eine etwa gleich große radiale Verschiebung wie im Bereich des Rotorkörpers 11, wodurch die Wicklungsstäbe 5, 6 minimal mechanisch belastet werden. Die radialen Relativbewegungen zwischen Rotorkörper 11 und Wickelkopf 7 können so in allen Betriebszuständen gering gehalten werden, sodass möglichst keine Biege- bzw. Scherbeanspruchungen der Wicklungsstäbe 5, 6 hervorgerufen werden.

Es müssen natürlich nicht zwischen allen Wicklungsstäben 5, 6 Distanzstücke 14 angeordnet sein, sondern es können auch Zwischenräume vorgesehen sein, durch die z.B. Kühlluft durchgeführt werden kann.

Werden die Distanzstücke 14 als Hohlprofile ausgeführt, wie in Fig. 2 angedeutet, können diese auch zur Kühlluftführung genutzt werden. Vorzugsweise ist dieses Hohlprofil mit in Längsrichtung, also parallel zu den Wicklungsstäben ausgerichteten Rippen ausgeführt. Dazu ist z.B. radial innen zum Wickelkopf 7 ein Radiallüfter 13 (in Fig. 1 dargestellt) angeordnet, der kalte Kühlluft, z.B. von einem nicht dargestellten Wärmetauscher, ansaugt und radial nach außen zum Wickelkopf 7 bläst. Dort wird die Kühlluft von der radialen auf eine axiale Richtung umgelenkt, z.B. durch geeignete Umlenkbleche, und strömt dann durch die Kanäle der Hohlprofile der Distanzstücke 14 axial nach außen, wodurch der Wickelkopf gekühlt wird. Diese Kühlluftführung ist in Fig. 1 und Fig. 3 durch Pfeile angedeutet.

Ebenso ist es möglich zwischen Oberstab 5 und Unterstab 6 und/oder zwischen Oberstab 5 und Außenring 10 und/oder zwischen Unterstäben 6 und Innenring 12 Isolationsbeilagen 15, z.B. aus einem Hartfasergewebe, anzuordnen, um eine bessere elektrische Isolation der Ober- und Unterstäben 5, 6 zu erreichen. Diese Isolationsbeilagen 15 sind dann natürlich auch Teil des Verbundes.

Eine Montage einer erfindungsgemäßen Wickelkopfabstützung könnte dabei wie folgt ablaufen: Zuerst wird im Bereich des Wickelkopfes 7 der Innenring 12 angeordnet und danach werden die Unterstäbe 6 in die Nuten eingelegt und fixiert. Darauf folgend werden im Wickelkopfbereich zwischen den Unterstäben 6 die Distanzstücke 14 eingelegt. Anschließend kann eine Isolationsbeilage 15 um die Distanzstücke 14 angeordnet werden. Darauf folgend können die Oberstäbe 5 in die Nuten eingelegt werden. Die Nuten können danach auch bereits durch Nutkeile verschlossen werden. Sind die Oberstäbe 5 eingelegt, können dazwischen im Wickelkopfbereich wieder Distanzstücke 14 angeordnet werden. In diesem Stadium der Montage können auch Schaltverbindungen, Stabverbinder 8 und Isolationskappen angeordnet werden. Gegebenenfalls kann nun auch eine weitere Isolationsbeilage 15 um die Oberstäbe 5 bzw. um die Distanzstücke 14 angeordnet werden. Anschließend wird der auf eine bestimmte Temperatur, z.B. 160° bis 200°C, gebrachte Außenring 10 übergestülpt und abgekühlt. Dadurch schrumpft der Außenring 10 und schrumpft auf den Innenring 12 (über die Distanzstücke 14) auf, wodurch der Verbund ausgebildet wird. Damit wird der Wickelkopf 7 durch die gegenseitige Verspannung in radialer Richtung abgestützt und im Betrieb gegen die mechanischen Belastungen, welche durch die entstehenden Fliehkräfte hervorgerufen werden, geschützt.

Der Verbund aus Innenring 12, Wicklungsstäben 5, 6, Distanzstücken 14 und gegebenenfalls Isolationsschichten 15 kann dabei so ausgelegt werden, dass die radialen Relativbewegungen von Rotorkörper 11 und Wickelkopf 7 in allen Betriebszuständen gering bleiben und möglichst keine Biege- bzw. Scherbeanspruchungen der Wicklungsstäbe 5, 6 hervorrufen.

## Patentansprüche

1. Abstützung für einen Wickelkopf eines Rotors einer elektrischen Maschine, wobei der Rotor (1) ein Blechpaket (3) umfasst, in dem über dessen Umfang verteilt Wicklungsstäbe (5, 6) eingelegt sind, wobei sich die Wicklungsstäbe (5, 6) über ein axiales Ende des Blechpakets (3) zur Ausbildung des Wickelkopfes (7) hinaus erstrecken, **dadurch gekennzeichnet, dass** die Wickelkopfabstützung im Bereich des Wickelkopfes (7) einen Außenring (10) und einen Innenring (12) umfasst, zwischen denen die Wicklungsstäbe (5, 6) im Bereich des Wickelkopfes (7) anordenbar sind, wobei der Außenring (10) auf die Wicklungsstäbe (5, 6) aufgeschrumpft ist und mit dem Innenring (12) und den Wicklungsstäben (5, 6) im Bereich des Wickelkopfes (7) einen Verbund bildet und sowohl der Außenring (10), als auch der Innenring (12) vom Blechpaket (3) axial beabstandet angeordnet ist, wobei sich beide Ringe (10, 12) radial ungehindert aufweiten können, sodass der Verbund in radialer Richtung im Wesentlichen frei beweglich ist.

2. Wickelkopfabstützung nach Anspruch 1, **dadurch gekennzeichnet, dass** im Bereich des Wickelkopfes (7) in Umfangsrichtung zwischen zwei in Umfangsrichtung benachbarten Wicklungsstäben (5, 6) ein Distanzstück (14) angeordnet ist, das zumindest gleich hoch, bevorzugt geringfügig höher, ist, als die Wicklungsstäbe(5, 6).

3. Wickelkopfabstützung nach Anspruch 2, **dadurch gekennzeichnet, dass** das Distanzstück (14) als Hohlprofil ist.

4. Wickelkopfabstützung nach einem der Ansprüche 1 bis 3, **dadurch gekennzeichnet, dass** in radialer Richtung zwischen Innenring (12) und Wicklungsstäben (5, 6) und/oder zwischen Außenring (10) und Wicklungsstäben (5, 6) eine Isolationsbeilage (15) angeordnet ist.

5. Wickelkopfabstützung nach einem der Ansprüche 1 bis 4, **dadurch gekennzeichnet, dass** in radialer Richtung ein Unterstab (6) und ein Oberstab (5) übereinander angeordnet sind und in Umfangsrichtung zwischen zwei benachbarten Unterstäben (6) und/oder Oberstäben (5) ein Distanzstück (14) angeordnet ist, das zumindest gleich hoch, bevorzugt geringfügig höher, ist, wie der Unterstab (6) bzw. der Oberstab (5).

6. Wickelkopfabstützung nach Anspruch 5, **dadurch gekennzeichnet, dass** in radialer Richtung zwischen Unterstäben (6) und Oberstäben (5) eine Isolationsbeilage (15) angeordnet ist.

7. Wickelkopfabstützung nach einem der Ansprüche 1 bis 6, **dadurch gekennzeichnet, dass** im Bereich des Innenringes (12) eine Halteeinrichtung (9) vorgesehen ist, die mit dem Innenring (12) zusammenwirkt und eine axiale Bewegung des Wickelkopfes (7) verhindert.

8. Wickelkopfabstützung nach einem der Ansprüche 2 bis 7, **dadurch gekennzeichnet, dass** im Bereich des Wickelkopfes (7) Kühlluft zwischen den Wicklungsstäben (5, 6) und/oder durch die Distanzstücke (14) axial nach außen führbar ist.

9. Verfahren zur Montage einer Wickelkopfabstützung einer Rotorwicklung, **dadurch gekennzeichnet, dass**
a) ein Innenring (12) axial beabstandet vom Blechpaket (3) des Rotorkörpers angeordnet wird,
b) über den Umfang verteilt Wicklungsstäbe (6), die sich zur Ausbildung eines Wickelkopfes (7) über ein axiales Ende des Blechpaketes (3) erstrecken, in das Blechpaket (3) eingelegt werden und
c) ein Außenring (10) im Bereich des Wickelkopfes (7) axial beabstandet vom Blechpakete (3) auf die Wicklungsstäbe (6) und den Innenring (12) aufgeschrumpft wird, wobei ein Verbund aus Außenring (10) und den Wicklungsstäben (6) im Bereich des Wickelkopfes (7) und dem Innenring (12) entsteht, wobei sich beide Ringe (10, 12) radial ungehindert aufweiten können und wobei der Verbund in radialer Richtung im Wesentlichen frei beweglich bleibt.

10. Verfahren nach Anspruch 9, **dadurch gekennzeichnet, dass** vor dem Aufschrumpfen des Außenringes (10) im Bereich des Wickelkopfes (7) zwischen zwei in Umfangsrichtung benachbarten Wicklungsstäben (6) ein Distanzstück (14), das bevorzugt höher als die Wicklungsstäbe (6) ist, angeordnet wird.

11. Verfahren nach einem der Ansprüche 9 oder 10, **dadurch gekennzeichnet, dass** zwischen Innenring (12) und Wicklungsstäben (6) und/oder zwischen Wicklungsstäben (6) und dem Außenring (10) eine Isolationsbeilage (15) angeordnet wird.

12. Verfahren nach einem der Ansprüche 9 bis 10, **dadurch gekennzeichnet, dass** vor dem Aufschrumpfen des Außenringes (10) eine zweite Lage über den Umfang verteilter Wicklungsstäbe (5) in das Blechpaket (3) auf eine erste Lage von Wicklungsstäben (6) eingelegt wird.

13. Verfahren nach Anspruch 12, **dadurch gekennzeichnet, dass** vor dem Aufschrumpfen des Außenringes (10) im Bereich des Wickelkopfes (7) zwischen zwei benachbarten Wicklungsstäben (5) der zweiten Lage ein Distanzstück (14), das bevorzugt höher als die Wicklungsstäbe (5) ist, angeordnet wird.

14. Verfahren nach einem der Ansprüche 12 oder 13, **dadurch gekennzeichnet, dass** zwischen Innenring (12) und Wicklungsstäben (6) der ersten Lage und/oder zwischen Wicklungsstäben (5, 6) der ersten und zweiten Lage und/oder zwischen den Wicklungsstäben (5) der zweiten Lage und dem Außenring (10) eine Isolationsbeilage (15) angeordnet wird.

15. Verfahren nach einem der Ansprüche 9 bis 14, **dadurch gekennzeichnet, dass** im Bereich des Innenringes (12) eine Halteeinrichtung (9) angeordnet wird, die mit dem Innenring (12) zusammenwirkt und ein axiales Verschieben des Wickelkopfes (7) verhindert sowie dessen Zentrierung gewährleistet.

## Claims

1. Support for an end winding of a rotor of an electrical machine, where the rotor (1) comprises a stator core (3) in which winding bars (5, 6) are inserted and distributed around the circumference, where the winding bars (5, 6) extend beyond an axial end of the stator core (3) to form the end winding (7), **characterised in that** the end winding support comprises an outer ring (10) and an inner ring (12) in the area of the end winding (7) between which the winding bars (5, 6) can be arranged in the area of the end winding (7), where the outer ring (10) is shrunk onto the winding bars (5, 6) and forms a compound structure with the inner ring (12) and the winding bars (5, 6) in the area of the end winding (7) and both the outer ring (10) and the inner ring (12) are arranged at a certain distance from the stator core (3) in axial direction, where both rings (10, 12) can expand unchecked in radial direction in such a way that the compound structure can largely move freely in radial direction.

2. End winding support according to Claim 1, **characterised in that** a spacer (14) that is at least the same height as the winding bars (5, 6), preferably slightly higher, is arranged in the region of the end winding (7) in circumferential direction between two winding bars (5, 6) that are adjacent in circumferential direction.

3. End winding support according to Claim 2, **characterised in that** the spacer (14) is designed as a hollow profile.

4. End winding support according to one of Claims 1to 3, **characterised in that** an insulation layer (15) is arranged in radial direction between inner ring (12) and winding bars (5, 6) and/or between outer ring (10) and winding bars (5, 6).

5. End winding support according to one of Claims 1 to 4, **characterised in that** a bottom bar (6) and a top bar (5) are arranged on top of one another in radial direction and a spacer (14) that is at least the same height as the bottom bar (6) and the top bar (5), respectively, preferably slightly higher, is arranged in circumferential direction between two adjacent bottom bars (6) and/or top bars (5).

6. End winding support according to Claim 5, **characterised in that** an insulation layer (15) is arranged in radial direction between bottom bars (6) and top bars (5).

7. End winding support according to one of Claims 1 to 0, **characterised in that** a retaining device (9) is provided in the region of the inner ring (12) and which interacts with the inner ring (12) and prevents axial movement by the end winding (7).

8. End winding support according to one of Claims 2 to 7, **characterised in that** it is possible to direct cooling air outwards axially in the region of the end winding (7) between the winding bars (5, 6) and/or through the spacers (14).

9. Method for mounting an end winding support of a rotor winding, **characterised in that**
a) an inner ring (12) is arranged at a certain distance in axial direction from the stator core (3) of the rotor body,
b) winding bars (6) distributed over the circumference and extending beyond an axial end of the stator core (3) to form an end winding (7) are inserted into the stator core (3), and
c) an outer ring (10) is shrunk onto the winding bars (6) and the inner ring (12) in the area of the end winding (7) at a certain distance from stator cores (3) in axial direction, where a compound structure is formed by the outer ring (10) and the winding bars (6) in the area of the end winding (7) and the inner ring (12), where both rings (10, 12) can expand unchecked in radial direction and where the compound structure remains largely freely movable in radial direction.

10. Method according to Claim 9, **characterised in that** a spacer (14) that is preferably higher than the winding bars (6) is arranged in the area of the end winding (7) between two winding bars (6) adjacent to one another in circumferential direction before shrinking the outer ring (10) on.

11. Method according to one of Claims 9 or 10, **characterised in that** an insulation layer (15) is arranged between inner ring (12) and winding bars (6) and/or between winding bars (6) and the outer ring (10).

12. Method according to one of Claims 9 to 10, **characterised in that** a second layer of winding bars (5) distributed around the circumference is inserted into the stator core (3) on a first layer of winding bars (6) before shrinking on the outer ring (10).

13. Method according to Claim 12, **characterised in that** a spacer (14) that is preferably higher than the winding bars (5) is arranged in the area of the end winding (7) between two adjacent winding bars (5) of the second layer before shrinking on the outer ring (10).

14. Method according to one of Claims 12 or 13, **characterised in that** an insulation layer (15) is arranged between inner ring (12) and winding bars (6) of the first layer and/or between winding bars (5, 6) of the first and second layer and/or between the winding bars (5) of the second layer and the outer ring (10).

15. Method according to one of Claims 9 to14, **characterised in that** a retaining device (9) is arranged in the region of the inner ring (12) and which interacts with the inner ring (12) and prevents axial displacement of the end winding (7) as well as guaranteeing that it is centred.

## Revendications

1. Support pour une tête de bobine d'un rotor d'une machine électrique, le rotor (1) comprenant un noyau feuilleté (3), dans lequel sont réparties sur sa périphérie des barres d'enroulement (5, 6), les barres d'enroulement (5, 6) s'étendent au-delà d'une extrémité axiale du noyau feuilleté (3) pour former la tête de bobine (7) **caractérisé en ce que** le support pour tête de bobine comprend dans la zone de la tête de bobine (7) une bague externe (10) et une bague interne (12), entre lesquelles peuvent être disposées les barres d'enroulement (5, 6) dans la zone de la tête de bobine (7), la bague externe (10) étant frettée sur les barres d'enroulement (5, 6) et avec la bague interne (12) et les barres d'enroulement (5, 6) formant une liaison dans la zone de la tête de bobine (7) et tant la bague externe (10) que la bague interne (12) étant éloignées axialement du noyau feuilleté (3), les deux bagues (10, 12) pouvant s'élargir radialement sans encombre, de sorte que la liaison puisse se déplacer sensiblement librement dans la direction radiale.

2. Support pour une tête de bobine selon la revendication 1, **caractérisé en ce que** dans la zone de la tête de bobine (7) dans la direction circonférentielle entre deux barres d'enroulement (5, 6) adjacentes dans la direction circonférentielle est disposé un calage (14), qui est au moins de la même hauteur, de préférence légèrement plus haut que les barres d'enroulement (5, 6).

3. Support pour une tête de bobine selon la revendication 2, **caractérisé en ce que** le calage (14) est un profilé creux.

4. Support pour une tête de bobine selon une des revendications 1 à 3, **caractérisé en ce que** dans la direction radiale entre la bague interne (12) et les barres d'enroulement (5, 6) et/ou entre la bague externe (10) et les barres d'enroulement (5, 6) est disposée une cale isolante (15).

5. Support pour une tête de bobine selon une des revendications 1 à 4, **caractérisé en ce que** dans la direction radiale sont disposées l'une au-dessus de l'autre une barre inférieure (6) et une barre supérieure (5) et dans la direction circonférentielle entre deux barres inférieures adjacentes (6) et/ou barres supérieures (5) est disposé un calage (14) qui est au moins de la même hauteur, de préférence légèrement plus haut que la barre inférieure (6) ou la barre supérieure (5).

6. Support pour une tête de bobine selon la revendication 5, **caractérisé en ce que** dans la direction radiale entre la barre inférieure (6) et la barre supérieure (5) est disposée une cale isolante (15).

7. Support pour une tête de bobine selon une des revendications 1 à 6, **caractérisé en ce que** dans la zone de la bague interne (12) est prévu un dispositif de retenue (9) qui coopère avec la bague interne (12) et rend impossible un mouvement axial de la tête de bobine (7).

8. Support pour une tête de bobine selon une des revendications 2 à 7, **caractérisé en ce que** dans la zone de la tête de bobine (7) peut être guidé axialement vers l'extérieur de l'air de refroidissement entre les barres d'enroulement (5, 6) et/ou à travers le calage (14).

9. Procédé de montage d'un support pour une tête de bobine d'un enroulement de rotor, **caractérisé en ce qu'**
a) une bague interne (12) est espacée axialement du noyau feuilleté (3) du corps de rotor,
b) des barres d'enroulement (6) réparties sur la circonférence, qui s'étendent sur une extrémité axiale du noyau feuilleté (3) pour former une tête de bobine (7), sont disposées dans le noyau feuilleté (3) et
c) une bague externe (10) est fretté dans la zone de la tête de bobine (7) espacée du noyau feuilleté (3) sur les barres d'enroulement (6) et la bague interne (12), une liaison étant constituée à partir de la bague externe (10) et des barres d'enroulement (6) dans la zone de la tête de bobine (7) et à partir de la bague interne (12), les deux bagues (10, 12) pouvant s'élargir radialement sans encombre et la liaison restant sensiblement librement mobile dans la direction radiale.

10. Procédé selon la revendication 9, **caractérisé en ce qu'**avant que la bague externe (10) ne soit frettée dans la zone de la tête de bobine (7), entre deux barres d'enroulement (6) adjacentes dans la direction circonférentielle est disposé un calage (14), qui est de préférence plus haut que la barre d'enroulement (6).

11. Procédé selon une des revendications 9 ou 10, **caractérisé en ce qu'**entre la bague interne (12) et les barres d'enroulement (6) et/ou entre les barres d'enroulement (6) et la bague externe (10) est disposée une cale isolante (15).

12. Procédé selon une des revendications 9 à 10, **caractérisé en ce qu'**avant que la bague externe (10) ne soit frettée, est insérée une seconde couche sur la circonférence de la barre d'enroulement répartie (5), dans le noyau feuilleté (3) sur une première couche de barres d'enroulement (6).

13. Procédé selon la revendication 12, **caractérisé en ce qu'**avant que la bague externe (10) ne soit frettée dans la zone de la tête de bobine (7) entre deux barres d'enroulement adjacentes (5) de la seconde couche, est disposé un calage (14), qui est de préférence plus haut que la barre d'enroulement (5).

14. Procédé selon une des revendications 12 ou 13, **caractérisé en ce qu'**entre la bague interne (12) et les barres d'enroulement (6) de la première couche et/ou entre les barres d'enroulement (5, 6) de la première et la seconde couche et/ou entre les barres d'enroulement (5) de la seconde couche et la bague externe (10) est disposée une cale isolante (15).

15. Procédé selon une des revendications 9 à 14, **caractérisé en ce que** dans la zone de la bague interne (12) est disposé un dispositif de retenue (9) qui coopère avec la bague interne (12) et rend impossible le déplacement axial de la tête de bobine (7) et garantit son centrage.
